# EUROPEAN PATENT SPECIFICATION

(11) **EP 1 190 313 B1**
(45) Date of publication and mention of the grant of the patent: **14.11.2012**
(21) Application number: 99965652.3
(22) Date of filing: 15.12.1999
(51) Int. Cl.: G06F 9/38

(54) **RESULT FIELD QUEUE**
ERGEBNIS-FELD WARTESCHLEIFE
FILE D'ATTENTE DANS LA ZONE RESULTATS

(30) Priority: 11.01.1999 SE 9900042; 20.05.1999 SE 9901844
(43) Date of publication of application: 27.03.2002
(73) Proprietor: Telefonaktiebolaget LM Ericsson (publ), 164 83 Stockholm (SE)
(72) Inventor: BERGLIN, Pàr David, 584 31 Lindkoping (SE); PETTERSSON, Christian, 412 65 Göteborg (SE)
(74) Representative: Stenborg, Anders Vilhelm
(86) International application number: PCT/SE1999/002362
(87) International publication number: WO 2000/042501

(56) References cited:
- EP-A2- 0 686 913
- EP-A2- 0 686 914
- WO-A-98/33116
- WO-A1-99/08185
- US-A- 5 903 741
- US-A- 5 946 468

## Description

### TECHNICAL FIELD

This invention relates to the field of processors and in particular to reorder buffers in superscalar processors.

### TECHNICAL BACKGROUND

In order to increase the capability of modem processors, the development is directed to solutions, where computer processors execute several tasks in parallel. A superscalar processor handles more than one instruction each clock cycle. The reason for this development is that the speed of accessing memories has not increased in the same rate as the increasing processor speed. With instruction parallelism, more accesses to memories and register files can be performed and even if the delay of each access is the same, more accesses can still be done over the same period of time.

The handling of a number of concurrently executed instructions has large benefits. Some of the benefits are particularly pronounced when also using out-of-order execution, which nowadays often is employed. If an instruction has to wait for its operands to be ready for a long time, there will be a stall in the processing of subsequent instructions. Other instructions occurring later in the program sequence order, but which already have its operands available, can in such cases be executed while the first instruction still waits for its operands. This reduces the impact of a slow memory and complex instruction dependencies and maintains a higher throughput of instructions. However, it demands new functions keeping track of the instructions and their results.

When using out-of-order execution, different hazards regarding conflicts in operands and register file handling may occur. In such cases, a reorder buffer is introduced to keep track of the instructions, their results, their internal dependencies and order them in a proper program sequence. When an instruction is dispatched, i.e. the decoding of the instruction is ready and sent to a functional unit, the instruction is also assigned a location in the reorder buffer. The reorder buffer also includes a number of storage locations which are dynamically allocated to instruction results. The destination register number of the instruction is associated with this location, which thus renames the destination register number of the instruction to the reorder buffer location. A tag is generated to identify the result, which tag points to the assigned reorder buffer location. When a later instruction refers to the renamed destination register, the instruction instead obtains the value stored in the reorder buffer. When the execution of an instruction is completed and the instruction is committed, i.e. when the results are written back to the register file, the assigned location in the reorder buffer is removed. The reorder buffer thus contains the speculative or temporary state of the microprocessor, whereas a register file contains the real state of the microprocessor.

When an instruction is decoded, the register number of the source operands of the instruction are used to access both the reorder buffer and the register file. If the reorder buffer does not have a destination register number which matches the source operand, the value in the register file is selected. If the reorder buffer does match the register number of the source operand, the value or a tag for the value is selected from the reorder buffer. In a typical instruction sequence, a given register may be written many times. For this reason, it is possible that different instructions cause the same register to be written into different locations in the reorder buffer. To obtain the correct register value, the reorder buffer prioritises multiple matching locations by the program sequence order, i.e. the entry into the reorder buffer, and returns the value of the most recent instruction, writing to that register. By this technique, new entries to the reorder buffer supersede older entries. However, this also requires new functions keeping track of the last instruction in the reorder buffer writing to a certain register.

In a superscalar processor, the results of many instructions are also associated with flags, controlling certain operations or indicating the status of the processor. These flags are more frequently used information flag, which are not permanently stored elsewhere and may indicate certain commonly occurring events, e.g. carry, a zero, overflow, underflow, parity, sign etc. Such flags are parts of a result field. A subsequent instruction may make use these flags produced by an earlier instruction as a source operand, e.g. to make a jump decision. The result field is thus used for information of a simple meaning, which should be easily available for the subsequent dependent instruction. In a superscalar processor, an instruction using flags of the result field has to wait for the result of an earlier instruction updating the result field, to be calculated in the ALU. The latter instruction has a dependency on the former one, consisting of flags in the result field. It is thus necessary for the dependency checking to keep track also on the latest previous instruction updating the result field or part thereof.

In reorder buffers according to the state of the art, the processor stores all instructions in a main buffer together with associated information, e.g. concerning reading and writing addresses and sequence number. Here, information about if the result field is updated may also be entered. The main reorder buffer is normally arranged as a first-in-first-out queue in order to maintain the original sequence order. The results of the first instruction are written into appropriate register positions when the results are available, and the instruction is removed from the reorder buffer queue. The procedure of treating the first instruction in order to take care of its result and removing it from the queue is known as committing the instruction.

When a new instruction, which uses the content in the result field, is received, the logics in the reorder buffer searches for the last instruction in the buffer, updating the result field and the reorder buffer puts a tag on the incoming instruction so that it is not allowed to be executed until the result field is updated by that last instruction. Since the information comprised in the result field is assumed to be simple and often used for fast decisions, a problem with reorder buffers of prior art is that the search procedure is slow. The logics has to look through all buffer positions to find the last instruction that writes any results into the result field. This procedure takes a lot of time, especially when reorder buffers get larger and the processors get faster with a higher clock speed. Since the flags in the result field often are of crucial importance for the execution of programs, e.g. for conditional jumps, the treatment of such information search is important to speed up.

In analogy with the US patent 5,768,555 this may be solved by introducing a flag in the main reorder buffer, a last result writer flag. Such a flag indicates if the instruction is the last instruction in the buffer to update the result field. When a new instruction arrives to the reorder buffer, which writes to the result field, the flag is set on the new instruction and the flag of the old instruction is reset. For checking the result field dependency of a new incoming instruction, it is then only necessary to find the first set last result writer flag, since there is at most one such flag set in the entire buffer. However, at least a part of the buffer has to be searched for the last result writer flag, which requires appropriate logics and a certain time, in particular if the buffer is large. Also, when a mispredicted conditional jump has occurred, and the subsequent instructions in the reorder buffer are flushed or discarded, the recovery of the last result writer flag is cumbersome.

In the US patent 5,805,853, a superscalar microprocessor including flag operand renaming is disclosed. A few of the most important flags are given separate portions in the reorder buffer. This may separate the mutual dependency of the flags, but since these portions are entered into the main reorder buffer area, it has to be loaded with additional fields and connections to functional units. Furthermore, in order to utilise the advantages of the US patent 5,768,555 disclosure, last in buffer indications for each of them also have to be included.

In the publishes international patent application WO 98/33116, a similar system is disclosed. Here, a reorder buffer comprises a future file. The future file stores reorder buffer tag and/or instruction results for each register employed within a register file. When an instruction has a register as a source operand, the corresponding storage location is accessed and a reorder buffer tag or an instruction result is received. In the case of branch misprediction and exception, the values stores in the future file must be recovered. This is performed therefore provided procedures and devices for transmitting register file values from the register file to the future file for recovery. As for US patent 5,768,555, the recovery is still cumbersome.

### DESCRIPTION OF THE INVENTION

It is therefore a general object of the present invention to overcome recovery problems of prior art systems and still keep the time low for finding the last instruction in a reorder buffer writing in the result field. It is also an object of the present invention to achieve such time reductions with as limited additional hardware means as possible, preferably less.

The above objects have been achieved by a device and method according to the enclosed claims.

In general words, the present invention has solved the problem to achieve a fast handling of instructions writing in the result field or parts thereof, by introducing a separate buffer for such instructions within the reorder buffer. This additional buffer, the "result field queue" is separated from the main buffer and contains only information associated with instructions updating the result field or a selected part thereof. This information comprises a sequence number of the associated instruction and preferably also an indication of whether the result of the instruction is available or not, and the result itself. When an instruction, updating the result field or part thereof reaches the reorder buffer, it is stored in the ordinary manner in the main buffer. However, the sequence number and preferably also a ready indication of the same instruction and the result field are at the same time also entered into the separate "result field queue". The result field queue operates in parallel with the main buffer and is preferably designed as a first-in-first-out queue. To evaluate if an instruction is the last one in the reorder buffer to update the result field, the subsequent position in the result field queue is checked. If this position is empty, the instruction is the last one. When looking for the last instruction updating the result field, the information in the last occupied position in the result field queue is simply returned and the searching is therefore trivial and thus less time consuming.

### BRIEF DESCRIPTION OF THE DRAWINGS

The invention is described in more detail below in connection with the enclosed drawings, in which:
- Fig. 1: is a schematic illustration of the distribution of instruction information according to the present invention;
- Fig. 2: is a block diagram showing an instruction processor unit, in which a reorder buffer according to the invention can be used;
- Fig. 3: is a block diagram showing an instruction queue controller, in which a reorder buffer according to the invention can be used;
- Fig. 4: is a block diagram of a reorder buffer according to the prior art;
- Fig. 5: is a block diagram of a first embodiment of a reorder buffer according to the present invention;
- Fig. 6: is a flow diagram, illustrating the process of storing instructions in a reorder buffer according to the present invention;
- Fig. 7: is a flow diagram, illustrating the process of checking dependencies in a reorder buffer according to the present invention;
- Fig. 8: is a flow diagram, illustrating the process of storing results according to the present invention; and
- Fig. 9: is a flow diagram, illustrating the process of committing instructions from a reorder buffer according to the present invention.

### DETAILED DESCRIPTION OF THE PREFERRED EMBODIMENTS

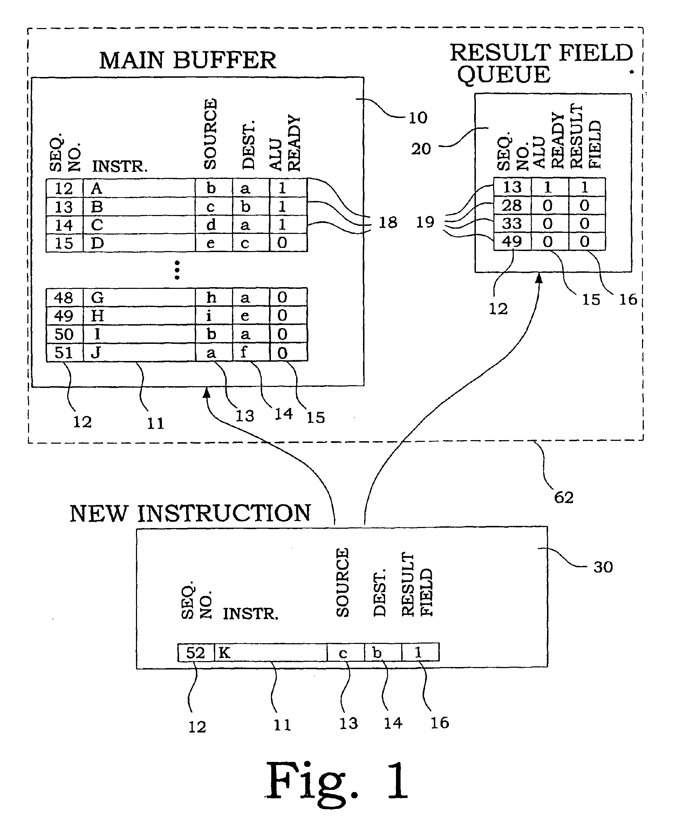

In fig. 1, the instruction information flow in a reorder buffer according to the present invention is illustrated. A reorder buffer 62 according to the present invention comprises a main buffer 10, in which instructions and associated information is stored. The instructions are identified and ordered by a tag, hereinafter referred to as the sequence number. The reorder buffer 62 according to the present invention also comprises an additional buffer 20, hereinafter referred to as a "result field queue", in which the sequence numbers of instructions updating the result field are stored, preferably together with selected associated information. The main buffer 10 contains a number of positions 18, in which information about instructions are to be placed. One buffer position 18 is intended for one instruction. Each buffer position 18 has a number of fields 11-15 in which information associated with the instruction can be stored. The result field queue 20 comprises in a similar manner a number of result field queue positions 19. Each result field queue position 19 has a number of fields, a part of which may be a subset of fields of the main buffer positions 18. Both buffers are normally designed as first-in-first-out (FIFO) queues, which means that the entries of information determines the order in which the information leaves the buffers. Other buffer solutions, operating in a non-FIFO manner may be used, e.g. where the order of instruction committing is influenced by dependency status. Such solutions as such are available in prior art, but generally not very advantageous in the present application.

Information 30 concerning a new instruction is sent to the reorder buffer 62. The information normally comprises the actual instruction 11 or a tag to or another representation of the instruction, and the sequence number 12, which indicates the order in which the instructions 11 are to be committed. Associated information may also comprise fields indicating data source operands 13, i.e. which variables or memory contents that should be used as operands of the instruction. Fields indicating result destination 14 may also be comprised, which fields indicate where the results from the instruction are going to be stored.

The information 30 about the new instruction is added to the first available position in the main buffer 10 at the end of the FIFO queue. If the new instruction updates the result field or a certain part thereof, information is also supplied to the result field queue 20. Preferably, the sequence number 12 is stored at the first available position in the result field queue 20.

Another often useful information associated with the instructions is if the instructions are executed or not, i.e. if the result is available. An ALU ready field 15 indicates if the results of the instruction are available or not. Such a field is preferably available both in the main buffer 10 and the result field queue 20. The result field 16 is preferably also available in the result field queue 20, but is typically not necessary in the main buffer 10.

When a new instruction arrives, which has a source operand in the result field, the last instruction updating the result field has to be found. The result field queue will according to the present invention send the last occupied position as the dependency of the new instruction. Thus, the main buffer does not need to make any specific searches. The main buffer only sends dependencies for ordinary destination operands. If an ALU ready field is present in the result field queue, the status of the dependency may also be checked. If the ALU ready field indicates that the instruction already is executed, the result in the result field is available, and there is no dependency halting further processing.

When the reorder buffer commits instructions updating the result field, also the result field queue shifts out instructions and updates the result field.

The time for searching for instructions updating the result field is by the present invention reduced significantly. This is caused by the use of such a separate buffer for the result field updating instructions. The last instruction in the queue obviously is the last one updating the result field, and no searching in the large main buffer has to be performed.

This proposed method, according to the present invention, involves the creation of an extra copy of some information, since it may appear both in the main buffer 10 and in the result field queue 20, even if the amount of copied information is limited. The sequence numbers and the ALU ready flag for some instructions are thus doubled. However, no "last in buffer" indicator for the result field updating is needed in the main buffer. If the number of positions and fields in the result field queue 20 is kept low, this extra storage only takes a small amount of extra area. This extra area is often negligible in comparison with the logics needed for searching the main buffer 10.

The present inventions thus provides a method which handles instructions updating the result field in a fast manner, which implies that the execution of instructions depending on the result field is speeded up. The method is generally applicable to all processors using out-of-order execution.

In the following, a presently preferred embodiment of the present invention will be described in some detail. This particular described processor constitutes a part of a telecommunication system, but the reorder buffer according to the present invention is useful in many types of processors using predicted jumps.

In a central processing unit (CPU) of the processor system there are basically two large components, a signal processor unit (SPU) and an instruction processor unit (IPU). The SPU handles job level execution, in which order jobs are to be executed, and the IPU executes the programs of each job. The reorder buffer is situated in the IPU, why only the IPU will be further described. First an overview of a processor design is given, in order to define the role of the reorder buffer.

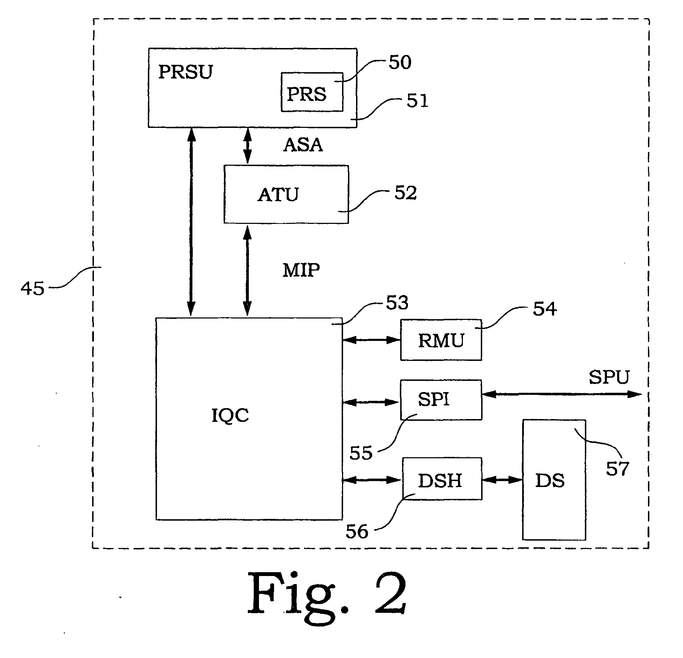

Fig. 2 illustrates a schematic block diagram of an IPU in a processor 45. The processor 45 also comprises SPU (not shown) and other auxiliary units (not shown) according to the knowledge of anyone skilled in the art. However, these parts are not central for the understanding of the present invention and any conventional technology may be used. An instruction queue controller IQC 53 communicates with a SPU via a signal processor interface SPI 55. The IPU receives jobs from the SPU. The job decides what programs are going to be executed in the IPU. A program reference store unit PRSU 51 keeps track of the programs in assembler code ASA. When a program is going to be executed it is fetched from a program reference store PRS 50 together with prediction information for conditional jumps. The ASA instructions and the predictions are sent to an address translation unit ATU 52 for decoding. The ATU 52 translates assembler instructions into micro-instructions MIP. The instructions are decoded and if an instruction is a conditional jump, the jump is predicted with help from the PRSU 50. The decoded micro-instructions are then sent to the IQC 53.

A data store DS 57 is the memory for data in the IPU and contains all the information necessary. A data store handler DSH 56 handles the accesses to the DS 57. A register memory unit RMU 54 contains register memory and link register stacks. Registers are written and read by instructions. Also other units may be included in the IPU, but since they do not affect the operation of the reorder buffer, the description of such detail parts will be excluded.

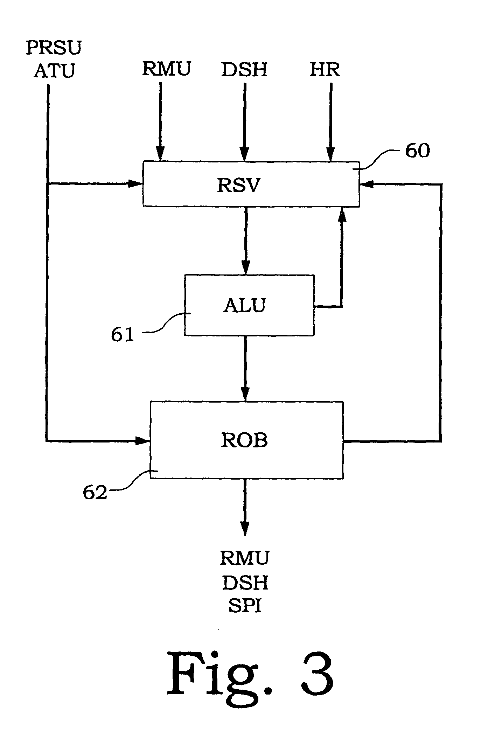

Fig. 3 illustrates a simple design of a IQC. Instructions from the PRSU and the ATU are together with a unique sequence number sent to reservation stations RSV 60 and to a reorder buffer ROB 62. The RSV 60 holds the instruction until all dependencies of other results have been solved and the operands have been fetched from memory and registers, e.g. a result field. It has normally several different queues to store the different types of instructions. When an instruction has all the operands, it is sent through an arithmetic logic unit ALU 61. Operands can be received from several different sources, e.g. DSH, RMU or hardware registers and status registers HR inside the IQC.

The ALU 61 executes all different types of instructions and stores the result in the reorder buffer ROB 62, normally within one clock cycle. If an instruction in the RSV 60 needs the result from another instruction it can receive the result from the ALU 61 or directly from the reorder buffer if the result is already calculated.

The reorder buffer ROB 62 stores all instructions received from the ALU 61. When an instruction is calculated, the result is stored in the reorder buffer together with the associated instruction. When the instructions are ready they are then committed, in the same order as they were received by the reorder buffer. The reorder buffer also keeps track of the predicted jumps, and flushes the IPU if mispredicted jumps are occurring. The committing involves writing of the results in different manners, e.g. to the RMU or DSH. Results may also be sent to the SPI.

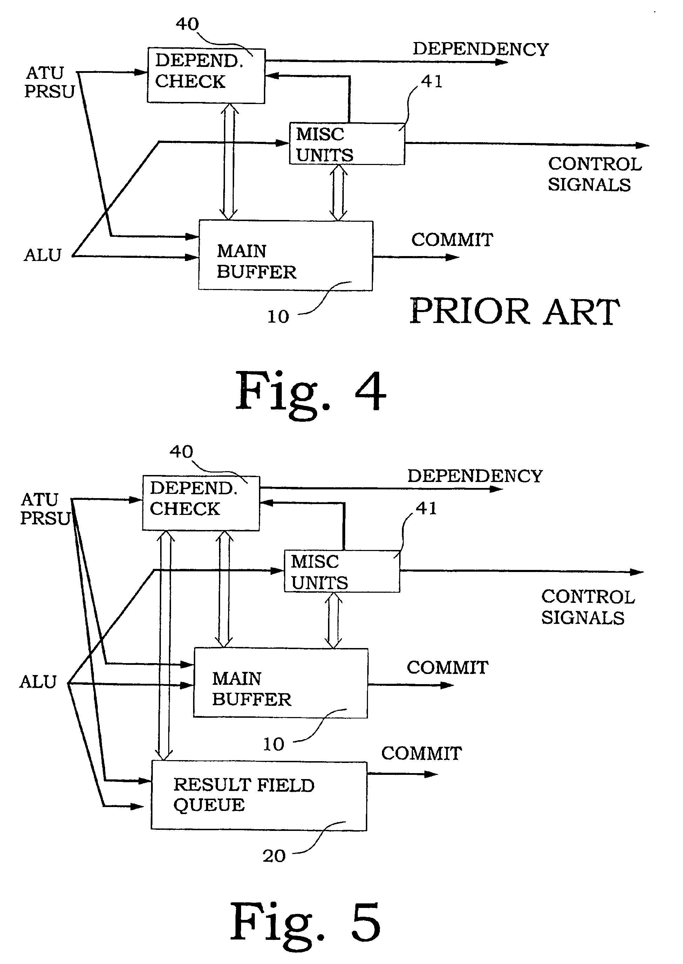

In order to better understand the important advantages with reorder buffers according to the present invention, a description of a reorder buffer according to the prior art is included. In fig. 4, a typical design of a reorder buffer according to prior art is disclosed. Instructions from the ATU or PRSU are received and stored in a main buffer 10, normally constituted as a first-in-first-out buffer. New instructions are inserted last into the buffer in the first empty positions, and instructions are committed from the first position. The instructions are also sent to a dependency check unit 40 for comparing the destination operands with operands of new incoming instructions. If there is a dependency, necessary information is sent to the RSV.

Results from the ALU are inserted into correct positions in the main buffer 10. A unit for miscellaneous functions 41 also receives the results from the ALU and in co-operation with the main buffer 10, it keeps track of different maintenance and control functions. The miscellaneous unit 41 is e.g. responsible for flushing the reorder buffer if a mispredicted conditional jump is detected. The miscellaneous unit 41 also supports the dependency check unit 40 with appropriate information.

In fig. 5, a reorder buffer according to a preferred embodiment of the present invention is illustrated. Instructions from the ATU or PRSU are received and stored in a main buffer 10, preferably constituted as a first-in-first-out buffer. New instructions are inserted last into the buffer in the first empty positions, and instructions are committed from the first position. The instructions are also sent to a dependency check unit 40 for comparing the destination operands with operands of new incoming instructions. If there is a dependency, necessary information is sent to the RSV. If the instruction from the ATU or PRSU is intended to update the result field, at least the sequence number is also sent to a result field queue 20. The result field queue is preferably designed as a first-in-first-out buffer, and the new instruction is inserted into the first empty position of the buffer 20. Since only instructions influencing the result field are inserted, the last position in the result field queue 20 is always occupied by the last instruction influencing the result field. The instructions are committed from the first position, at the same time as they are committed from the main buffer 10. The result field queue 20 is also connected to the dependency checking unit 40, for a rapid delivery of an indicator of the last instruction updating the result field. The dependency check unit 40 does not extract any result field information from the main buffer 10.

Results from the ALU are inserted into correct positions in the main buffer 10. A unit for miscellaneous functions 41 also receives the results from the ALU and in co-operation with the main buffer, it keeps track on different maintenance and control functions. The miscellaneous unit 41 also supports the dependency check unit 40 with appropriate information. The result field queue 20 is also supplied with appropriate results. If the results of an instruction stored in the result field queue 20 is available, the dependency is solved, and any subsequent dependent instruction may be prepared for execution.

It would be possible to store the result field updating instructions only in the result field queue 20, but the committing of instructions in a correct order will be more complicated if instructions may be committed from either of two buffers. More preferable is thus to store as little information as possible in the result field queue 20. This leads to a double storage of certain information, if the information is a copy of the information available in the main buffer, but it is negligible in comparison with the benefit of the arrangement.

The result field plays a special role in the execution of instructions. The result field comprises flags and indicators, which are not stored in any permanent manner elsewhere, and which results are intended for controlling the execution of instructions in a near future. The result field is therefore often updated, and many instructions are dependent just on the result field. The overall most common dependency whatever, in a normal reorder buffer is the dependency of the result field. A rapid treatment of such dependencies thus speeds up the overall processor speed.

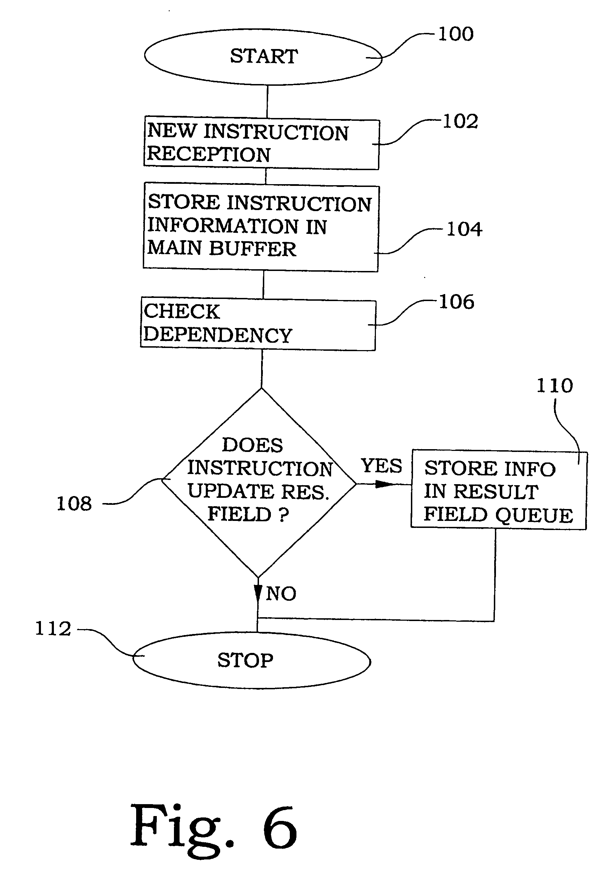

The procedure for handling instructions in a reorder buffer is dividable into different part processes. In fig. 6, a part process according to the present invention of inserting new instructions in the reorder buffer is illustrated. The part process starts in step 100. Instep 102, a new instruction from the ATU or PRSU is received in the reorder buffer. The instruction is in step 104 stored in the main buffer. In step 106, a dependency check is performed. This procedure will be described more in detail below. In step 108, it is decided whether or not the instruction updates the result field. If the instruction updates the result field, information associated with the instruction is stored in the result field queue in step 110. The information comprises normally the sequence number for the instruction, and preferably also a field for indication if the result from the instruction is available. The part process stops in step 112.

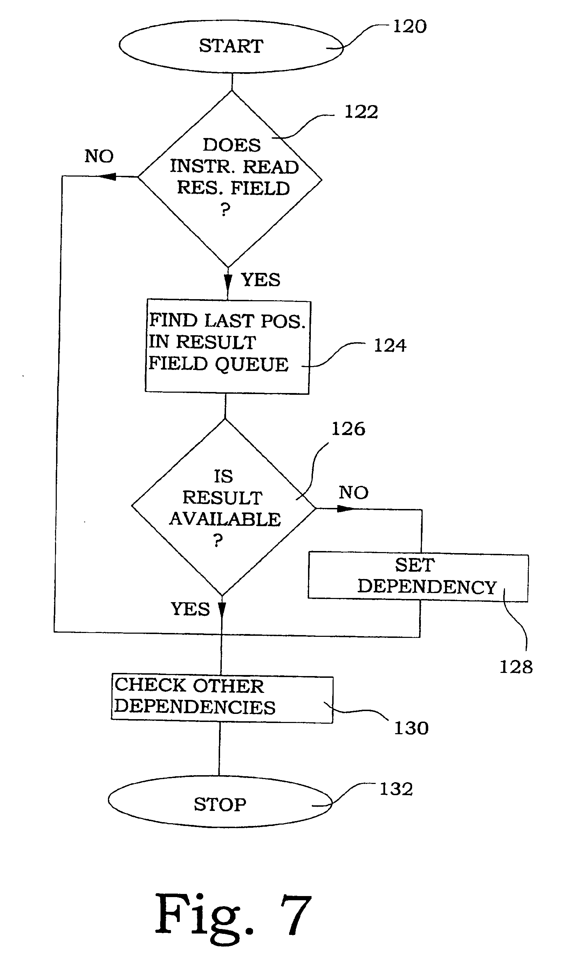

In fig. 7, the process of dependency checking is illustrated. The process starts in step 120. In step 122, it is decided whether or not the instruction uses any results from the result field as input for its calculations or other actions. If not, the part process continutes to step 130. If the instruction uses information from the result field, the last occupied position in the result field queue is found. The instruction in this position is the last instruction updating the result field, the last instruction that has to be ready before the new instruction can use the result field information. In step 126 a check is made, if the result of the last instruction updating the result field is available. In such a case, the new instruction is not prohibited by waiting for the result field to be updated. Otherwise, the process continues to step 128, where the dependency of the instruction in the last occupied position of the result field queue is noted. The process continues to step 130, where other dependencies are investigated. Such procedures are not directly part of the present invention and will not be described in further detail. The part process stops instep 132.

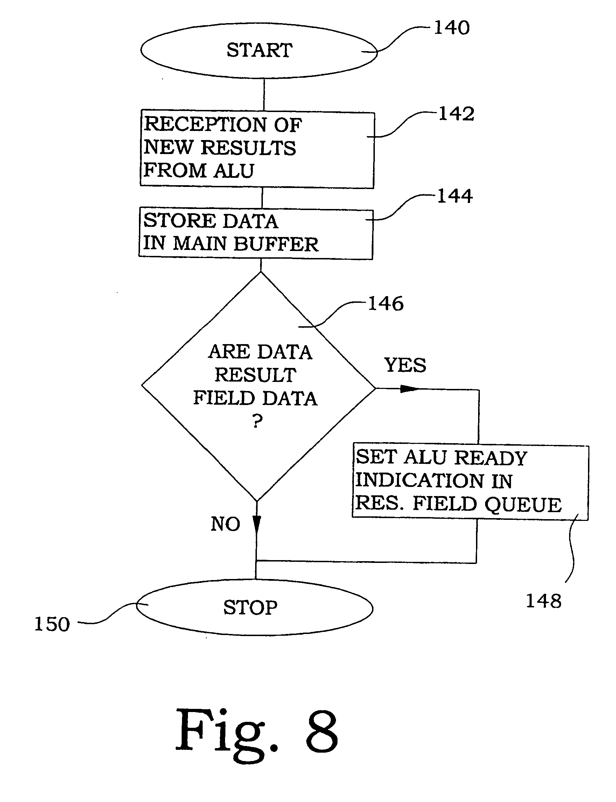

The next process involving the result field queue is the storing of results of executed instructions, which are waiting to be committed. Such a result storing process is illustrated in fig. 8. The process starts in step 140. In step 142, new results are received from the ALU. These results are associated with a certain instruction stored in the reorder buffer, and results, tags thereof or any other representation of the new results are stored together with the associated instruction in the main buffer of the reorder buffer in step 144. In step 146, it is decided if the results are to be stored in the result field, and if that is the case, in step 148, the ALU ready indication is set in the result field queue in the position which corresponds to the instruction in question. The part process ends in step 150.

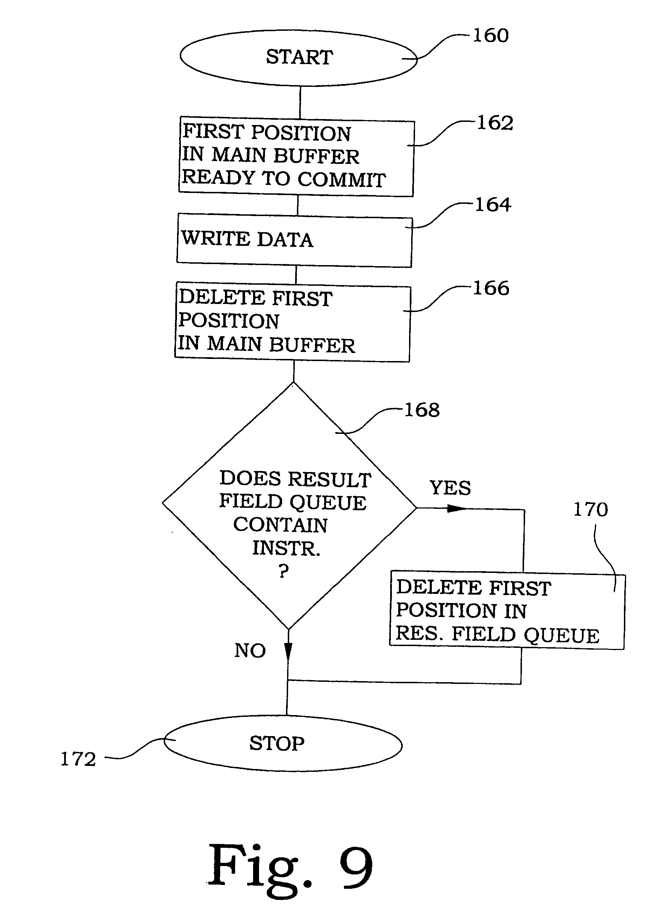

Fig. 9 illustrates the process of committing instructions from the reorder buffer. The process starts in step 160. In step 162, the first position in the main buffer is made ready to commit. In step 164 the results of the first instruction is written into data storages given by the results destination information. In step 166, the first position of the main buffer is deleted and the subsequent instructions are popped. In step 168, it is checked if the same sequence number is available also in the result field queue. If that is the case, in step 170, also the first position in the result field queue is deleted and the queue is popped. The process ends in step 170.

From the above description, the benefits of the present invention are easily understood. By extracting information related to instructions writing into the result field from the main buffer already at the insertion phase, the subsequent search for the last instruction in the reorder buffer updating the result field is facilitated. The extra space needed for the result field queue is compensated by the reduction of necessary searching means in the main buffer. The actual procedure of searching of the last instruction updating the result field is possible to perform more rapidly, since it is more or less trivial to find the last occupied position in the result field queue. This, in turn, leads to a faster overall evaluation time.

It will be understood by those skilled in the art, that various modifications and changes may be made to the described embodiments of the present invention without departing from the scope thereof, which is defined by the appended claims.

## Claims

1. A reorder buffer (62) allowing receiving of instructions comprising:
a main buffer (10) arranged for storage of a plurality of instructions (11) and associated information (12-15), wherein at least one of said instructions (11) updates a result field (16) or part thereof, said result field (16) comprising processor status flags; and said reorder buffer being arranged , when said reorder buffer (62) receives (102) a new instruction, for allowing finding (106, 108), a latest previous instruction in said reorder buffer (62) updating the result field or said part thereof if said new instruction is reading the result field or a part thereof, arranged for allowing setting (128) a dependency to said found latest previous instruction if said new instruction is reading the result field or a part thereof, arranged for allowing storing (144) results of executed instructions in said main buffer (10) and arranged for allowing committing (160-170) instructions from said main buffer (10);
**characterised in that**
said reorder buffer (62) comprises an additional buffer (20);
said additional buffer (20) being a queue of a plurality of positions (19) allowing storing in an unoccupied position information associated with a new instruction updating said result field or said part thereof ;
each of said plurality of positions (19) being arranged for storage of information (12,15,16) associated with one respective instruction updating said result field (16) or part thereof;
said additional buffer being arranged for said allowing finding (106,108) said latest previous instruction updating said result field or said part thereof and arranged for allowing committing instructions from said additional buffer (20) at the same time as they are committed from said main buffer (10).

2. The reorder buffer (62) according to claim 1, **characterised in that** at least a part of the content of said additional buffer (20) also is stored in said main buffer (10).

3. The reorder buffer (62) according to claim 1 or 2, **characterised in that** said additional buffer (20) is arranged as a first-in-first-out queue.

4. The reorder buffer (62) according to claim 1, 2 or 3, **characterised in that** said additional buffer (20) stores the result field (16).

5. The reorder buffer (62) according to any of the preceding claims, **characterised in that** said additional buffer (20) has a number of positions (19) which is in the same order of magnitude as the number of positions (18) of said main buffer, and **in that** each of said positions (19) of said additional buffer (20) has a number of fields which is less than the number of fields in each of said positions (18) of said main buffer (10).

6. The reorder buffer (62) according to any of the preceding claims, **characterised in that** each of said positions (19) of said additional buffer (20) at least comprises a sequence number (12) associated with an instruction updating said result field (16) or said part thereof.

7. The reorder buffer (62) according to claim 6, **characterised in that** each of said positions (19) of said additional buffer (20) also comprises a field indicating if the results of the associated instruction is available.

8. The reorder buffer (62) according to any of the preceding claims, **characterised in that** said reorder buffer comprises a dependency check unit (40) connected to said additional buffer (20) and to said main buffer (10).

9. A superscalar processor having a reorder buffer (62) according to any of the preceding claims.

10. A dependency handling method in a reorder buffer (62) receiving (102) new instructions comprising the steps of:
storing a new instruction and associated information (12-15) in a main buffer (10) of said reorder buffer (62);
if said new instruction is reading the result field or a part thereof, finding (106, 108), a latest previous instruction in said reorder buffer (62) updating the result field or said part thereof, said result field comprising processor status flags;
if said new instruction is reading the result field or a part thereof, further setting (128) a dependency to said found latest previous instruction;
storings (144) results of executed instructions in said main buffer (10);
committing (160-170) instructions from said main buffer (10), and **characterised in that** said method comprises the further steps of:
storing information associated with a new instruction updating said result field or said part thereof in an unoccupied position of a queue of a plurality of positions (19) of an additional buffer (20) in said reorder buffer (62);
each of said plurality of positions (19) being arranged for storage of information (12,15,16) associated with one respective instruction updating said result field (16) or part thereof;
wherein the step of finding said last instruction updating said result field or said part thereof is performed on said additional buffer (20);
committing instructions from said additional buffer (20) at the same time as they are committed from said main buffer (10).

11. The dependency handling method according to claim 10, **characterised in that** said step of storing information in said additional buffer (20) comprises storing information in a first-in-first-out manner, whereby said step of finding said last instruction updating said result field or said part thereof comprises the selection of the last occupied position in said additional buffer (20).

12. The dependency handling method according to claim 11, **characterised in that** said step of storing information in said additional buffer (20) comprises storing of a sequence number associated with said instruction.

13. The dependency handling method according to claim 12, **characterised by** setting an indication in said additional buffer (20) when results associated with an instruction updating said result field or said part thereof becomes available.

14. The dependency handling method according to any of the claims 10 to 13, **characterised by** committing the instruction at the first position in the additional buffer (20) if the corresponding instruction in the main buffer (10) is committed.

## Patentansprüche

1. Neuordnungspuffer (62), welcher das Empfangen von Befehlen erlaubt, umfassend:
einen Hauptpuffer (10), der eingerichtet ist zum Speichern einer Vielzahl von Befehlen (11) und assoziierter Information (12-15), wobei mindestens einer der Befehle (11) ein Ergebnisfeld (16) oder einen Teil davon aktualisiert, wobei das Ergebnisfeld (16) Prozessorzustandskennzeichen umfasst; und
der Neuordnungspuffer eingerichtet ist, wenn der Neuordnungspuffer (62) einen neuen Befehle empfängt (102), zum Erlauben des Auffindens (106, 108) eines neuesten vorherigen Befehls in dem Neuordnungspuffer (62), der das Ereignisfeld oder den Teil davon aktualisiert, wenn der neue Befehl das Ergebnisfeld oder einen Teil davon liest, eingerichtet ist zum Erlauben des Setzens (128) einer Abhängigkeit mit dem gefundenen neuesten vorherigen Befehl, wenn der neue Befehl das Ereignisfeld oder einen Teil davon liest, eingerichtet ist zum Erlauben des Speicherns (144) von Ergebnissen von ausgeführten Befehlen in dem Hauptpuffer (10) und eingerichtet ist zum Erlauben des Bindens (160-170) von Befehlen von dem Hauptspeicher (10);
**dadurch gekennzeichnet, dass**
der Neuordnungspuffer (62) einen Zusatzpuffer (20) umfasst;
wobei der Zusatzpuffer (20) eine Reihe von einer Vielzahl von Positionen (19) ist, die das Speichern von Information, assoziiert mit einem neuen Befehl, der das Ergebnisfeld oder den Teil davon aktualisiert, in einer unbesetzten Position erlaubt;
jede der Vielzahl von Positionen (19) eingerichtet ist zum Speichern von Information (12, 15, 16), assoziiert mit einem jeweiligen Befehl, der das Ergebnisfeld (16) oder einen Teil davon aktualisiert;
der Zusatzpuffer eingerichtet ist für das Erlauben des Auffindens (106, 108) des neuesten vorherigen Befehls, der das Ergebnisfeld oder den Teil davon aktualisiert, und eingerichtet ist zum Erlauben des Bindens von Befehlen von dem Zusatzpuffer (20) zur selben Zeit wie diese von dem Hauptpuffer (10) gebunden werden.

2. Neuordnungspuffer (62) nach Anspruch 1, **dadurch gekennzeichnet, dass** der mindestens eine Teil des Inhalts des Zusatzpuffers (20) auch in dem Hauptpuffer (10) gespeichert wird.

3. Neuordnungspuffer (62) nach Anspruch 1 oder 2, **dadurch gekennzeichnet, dass** der Zusatzpuffer (20) eingerichtet ist als eine First-In-First-Out-Reihe.

4. Neuordnungspuffer (62) nach Anspruch 1, 2 oder 3, **dadurch gekennzeichnet, dass** der Zusatzpuffer (20) das Ergebnisfeld (16) speichert.

5. Neuordnungspuffer (62) nach einem der vorangegangenen Ansprüche, **dadurch gekennzeichnet, dass** der Zusatzpuffer (20) eine Zahl von Positionen (19) aufweist, welche in derselben Reihenfolge der Größe der Zahl von Positionen (18) wie der Hauptpuffer sind und dadurch, dass jede der Positionen (19) des Zusatzpuffers (20) eine Zahl von Feldern aufweist, welche kleiner ist als die Zahl von Feldern in jeder der Positionen (18) des Hauptpuffers (10).

6. Neuordnungspuffer (62) nach einem der vorangegangenen Ansprüche, **dadurch gekennzeichnet, dass** jede der Positionen (19) des Zusatzpuffers (20) mindestens eine Laufnummer (12) umfasst, die assoziiert ist mit einem Befehl, der das Ereignisfeld (16) oder den Teil davon aktualisiert.

7. Neuordnungspuffer (62) nach Anspruch 6, **dadurch gekennzeichnet, dass** jede der Positionen (19) des Zusatzpuffers (20) ebenfalls ein Feder umfasst, welches anzeigt, ob die Ergebnisse des assoziierten Befehls verfügbar sind.

8. Neuordnungspuffer (62) nach einem der vorangegangenen Ansprüche, **dadurch gekennzeichnet, dass** der Neuordnungspuffer eine Abhängigkeitsüberprüfungseinheit (40) umfasst, die mit dem Zusatzpuffer (20) und dem Hauptpuffer (10) verbunden ist.

9. Superskalarer Prozessor mit einem Neuordnungspuffer (62) nach einem der vorangegangenen Ansprüche.

10. Abhängigkeitsbehandlungsverfahren in einem Neuordnungspuffer (62), welcher Befehle empfängt (102), umfassend die Schritte:
Speichern eines neuen Befehls und assoziierter Information (12-15) in einem Hauptpuffer (10) des Neuordnungspuffers (62);
wenn der neue Befehl das Ergebnisfeld oder einen Teil davon liest, Auffinden (106, 108) eines neuesten vorherigen Befehls in dem Neuordnungspuffer (62), der das Ergebnisfeld oder den Teil davon aktualisiert, wobei das Ergebnisfeld ein Prozessorzustandskennzeichen umfasst;
wenn der neue Befehl das Ergebnisfeld oder einen Teil davon liest, ferner Setzen (128) einer Abhängigkeit mit dem gefundenen neuesten vorherigen Befehl;
Speichern (144) von Ergebnissen von ausgeführten Befehlen in dem Hauptpuffer (10);
Binden (160-170) von Befehlen von dem Hauptpuffer (10), und
**dadurch gekennzeichnet, dass** das Verfahren die weiteren Schritte umfasst:
Speichern von Information, assoziiert mit einem neuen Befehl, der das Ergebnisfeld oder den Teil davon aktualisiert, in einer unbenutzten Position einer Reihe einer Vielzahl von Positionen (19) des Zusatzpuffers (20) in den Neuordnungspuffer (62);
wobei jede der Vielzahl von Positionen (19) eingerichtet ist zum Speichern von Information (12, 15, 16), assoziiert mit einem jeweiligen Befehl, der das Ergebnisfeld (16) oder einen Teil davon aktualisiert;
wobei der Schritt des Auffindens des letzten Befehls, der das Ergebnisfeld oder den Teil davon aktualisiert, auf dem Zusatzpuffer (20) ausgeführt wird;
Binden von Befehlen von dem Zusatzpuffer (20) zur selben Zeit wie diese von dem Hauptpuffer (10) gebunden werden.

11. Abhängigkeitsbehandlungsverfahren nach Anspruch 10, **dadurch gekennzeichnet, dass** der Schritt des Speicherns von Information in dem Zusatzpuffer (20) umfasst Speichern von Information in einer First-In-First-Out-Weise, wobei der Schritt des Auffindens des letzten Befehls, der das Ergebnisfeld oder den Teil davon aktualisiert, das Auswählen der letzten besetzten Position in dem Zusatzpuffer (20) umfasst.

12. Abhängigkeitsbehandlungsverfahren nach Anspruch 11, **dadurch gekennzeichnet, dass** der Schritt des Speicherns von Information in dem Zusatzpuffer (20) Speichern einer Folgenummer, assoziiert mit dem Befehl umfasst.

13. Abhängigkeitsbehandlungsverfahren nach Anspruch 12, **gekennzeichnet durch** Setzen eines Hinweises in dem Zusatzpuffer (20), wenn Ergebnisse, die mit einem Befehl assoziiert sind, der das Ergebnisfeld oder einen Teil davon aktualisiert, verfügbar werden.

14. Abhängigkeitsbehandlungsverfahren nach einem der Ansprüche 10 bis 13, **gekennzeichnet durch** Binden der Befehle an der ersten Position in dem Zusatzpuffer (20) wenn der entsprechende Befehl in dem Hauptpuffer (10) gebunden wird.

## Revendications

1. Tampon de reclassement (62) permettant la réception d'instructions, comprenant :
un tampon principal (10) conçu pour stocker une pluralité d'instructions (11) et des informations associées (12 à 15), dans lequel au moins une desdites instructions (11) met à jour un champ de résultat (16) ou une partie de celui-ci, ledit champ de résultat (16) comprenant des drapeaux d'état du processeur ; et
ledit tampon de reclassement étant conçu, lorsque ledit tampon de reclassement (62) reçoit (102) une nouvelle instruction, pour autoriser la recherche (106, 108) d'une dernière instruction antérieure dans ledit tampon de reclassement (62) qui met à jour le champ de résultat ou ladite partie de celui-ci si ladite nouvelle instruction lit le champ de résultat ou une partie de celui-ci, pour autoriser la création (128) d'une dépendance avec ladite dernière instruction antérieure ainsi trouvée si ladite nouvelle instruction lit le champ de résultat ou une partie de celui-ci, pour autoriser le stockage (144) des résultats des instructions exécutées dans ledit tampon principal (10) et pour autoriser la validation (160 à 170) d'instructions provenant dudit tampon principal (10) ;
**caractérisé en ce que** :
ledit tampon de reclassement (62) comprend un tampon supplémentaire (20) ;
ledit tampon supplémentaire (20) étant une file d'attente composée d'une pluralité de positions (19) permettant de stocker, dans une position inoccupée, des informations associées à une nouvelle instruction mettant à jour ledit champ de résultat ou ladite partie de celui-ci ;
chacune desdites positions dans ladite pluralité de positions (19) étant conçue pour stocker des informations (12, 15, 16) associées à une instruction respective mettant à jour ledit champ de résultat (16) ou ladite partie de celui-ci ;
ledit tampon supplémentaire étant conçu pour permettre ladite recherche (106, 108) de ladite dernière instruction antérieure mettant à jour ledit champ de résultat ou ladite partie de celui-ci et pour permettre la validation d'instructions provenant dudit tampon supplémentaire (20) en même temps qu'elles sont validées en provenance dudit tampon principal (10).

2. Tampon de reclassement (62) selon la revendication 1, **caractérisé en ce qu'**au moins une partie du contenu dudit tampon supplémentaire (20) est également stockée dans ledit tampon principal (10).

3. Tampon de reclassement (62) selon la revendication 1 ou 2, **caractérisé en ce que** ledit tampon supplémentaire (20) prend la forme d'une file d'attente de type premier entré premier sorti.

4. Tampon de reclassement (62) selon la revendication 1, 2 ou 3, **caractérisé en ce que** ledit tampon supplémentaire (20) stocke le champ de résultat (16).

5. Tampon de reclassement (62) selon l'une quelconque des revendications précédentes, **caractérisé en ce que** ledit tampon supplémentaire (20) possède un nombre de positions (19) qui est du même ordre de grandeur que le nombre de positions (18) dudit tampon principal et **en ce que** chacune desdites positions (19) dudit tampon supplémentaire (20) possède un nombre de champs qui est inférieur au nombre de champs dans chacune desdites positions (18) dudit tampon principal (10).

6. Tampon de reclassement (62) selon l'une quelconque des revendications précédentes, **caractérisé en ce que** chacune desdites positions (19) dudit tampon supplémentaire (20) comprend au moins un numéro d'ordre (12) associé à une instruction mettant à jour ledit champ de résultat (16) ou ladite partie de celui-ci.

7. Tampon de reclassement (62) selon la revendication 6, **caractérisé en ce que** chacune desdites positions (19) dudit tampon supplémentaire (20) comprend également un champ indiquant si les résultats de l'instruction associée sont disponibles.

8. Tampon de reclassement (62) selon l'une quelconque des revendications précédentes, **caractérisé en ce que** ledit tampon de reclassement comprend une unité de contrôle des dépendances (40) connectée audit tampon supplémentaire (20) et audit tampon principal (10).

9. Processeur superscalaire ayant un tampon de reclassement (62) selon l'une quelconque des revendications précédentes.

10. Procédé de traitement des dépendances dans un tampon de reclassement (62) recevant (102) de nouvelles instructions, comprenant les étapes consistant à :
stocker une nouvelle instruction et des informations associées (12 à 15) dans un tampon principal (10) dudit tampon de reclassement (62) ;
si ladite nouvelle instruction lit le champ de résultat ou une partie de celui-ci, rechercher (106, 108) une dernière instruction antérieure dans ledit tampon de reclassement (62) qui met à jour le champ de résultat ou ladite partie de celui-ci, ledit champ de résultat comprenant des drapeaux d'état du processeur ;
si ladite nouvelle instruction lit le champ de résultat ou ladite partie de celui-ci, créer en outre (128) une dépendance vis-à-vis de ladite dernière instruction antérieure ainsi trouvée ;
stocker (144) des résultats d'instructions exécutées dans ledit tampon principal (10) ;
valider (160 à 170) des instructions provenant dudit tampon principal (10) ; et
**caractérisé en ce que** ledit procédé comprend en outre les étapes consistant à :
stocker des informations associées à une nouvelle instruction qui met à jour ledit champ de résultat ou ladite partie de celui-ci dans une position inoccupée d'une file d'attente composée d'une pluralité de positions (19) d'un tampon supplémentaire (20) dans ledit tampon de reclassement (62) ;
chacune des positions dans ladite pluralité de positions (19) étant conçue pour stocker des informations (12, 15, 16) associées à une instruction respective qui met à jour ledit champ de résultat (16) ou ladite partie de celui-ci ;
dans lequel l'étape de recherche de ladite dernière instruction qui met à jour ledit champ de résultat ou ladite partie de celui-ci est exécutée sur ledit tampon supplémentaire (20) ;
valider des instructions provenant dudit tampon supplémentaire (20) en même temps qu'elles sont validées en provenance dudit tampon principal (10).

11. Procédé de traitement des dépendances selon la revendication 10, **caractérisé en ce que** ladite étape de stockage d'informations dans ledit tampon supplémentaire (20) comprend le stockage des informations en mode premier entré, premier sorti, si bien que ladite étape de recherche de ladite dernière instruction mettant à jour ledit champ de résultat ou ladite partie de celui-ci comprend la sélection de la dernière position occupée dans ledit tampon supplémentaire (20).

12. Procédé de traitement des dépendances selon la revendication 11, **caractérisé en ce que** ladite étape de stockage d'informations dans ledit tampon supplémentaire (20) comprend le stockage d'un numéro d'ordre associé à ladite instruction.

13. Procédé de traitement des dépendances selon la revendication 12, **caractérisé par** l'armement d'une indication dans ledit tampon supplémentaire (20) lorsque des résultats associés à une instruction qui met à jour ledit champ de résultat ou ladite partie de celui-ci deviennent disponibles.

14. Procédé de traitement des dépendances selon l'une quelconque des revendications 10 à 13, **caractérisé par** la validation de l'instruction se trouvant dans la première position du tampon supplémentaire (20) si l'instruction correspondante dans le tampon principal (10) est validée.
